# EUROPEAN PATENT SPECIFICATION

(11) **EP 0 728 080 B1**
(45) Date of publication and mention of the grant of the patent: **30.08.2000**
(21) Application number: 95901654.4
(22) Date of filing: 14.11.1994
(51) Int. Cl.: B60K 20/04, F16H 59/10

(54) **OPERATING DEVICE**
SCHALTVORRICHTUNG
DISPOSITIF D'ACTIONNEMENT

(30) Priority: 15.11.1993 SE 9303777; 15.11.1993 SE 9303778; 15.11.1993 SE 9303779
(43) Date of publication of application: 28.08.1996
(73) Proprietor: Kongsberg Automotive AB, 565 28 Mullsjö (SE)
(72) Inventor: SKOGWARD, Kenneth, S-561 48 Huskvarna (SE); TIMMANN, Klaus, S-553 07 Jönköping (SE)
(74) Representative: Mossmark, Anders
(86) International application number: PCT/SE94/01067
(87) International publication number: WO 95/13932

(56) References cited:
- EP-A- 0 437 150
- EP-A- 0 495 667
- US-A- 4 324 149

## Description

The present invention relates to a manoeuvring arrangement, comprising a manoeuvring lever, a manoeuvring bracket in which the lever is pivotally attached for movement between a number of manoeuvring positions, and a releasable manoeuvring latch for releasable blocking of the lever against an unintentional movement to certain manoeuvring positions, whereby the manoeuvring latch comprises a first latch portion belonging to the lever and a second latch portion belonging to the manoeuvring bracket, said second latch portion being formed by latch edges in the manoeuvring bracket.

### STATE OF THE ART:

An example of a manoeuvring arrangement is the gear control for automatic gearboxes in motor vehicles. Known gear. controls are provided with e.g. a three-dimensionally formed bracket of injection moulded plastic, which gives rise to high tooling costs. An alternative known solution is where the bracket is made in form-pressed sheet which implies a great deal of welding and fitting work as well as high tooling costs. From EP-A-0495667 an arrangement is known, having a manoeuvring bracket made by stamped sheet metal, which requires separate attachment details for sufficient stability.

### SUMMARY OF THE INVENTION:

The object of the present invention is to produce a manoeuvring arrangement which can be manufactured at relatively low cost, which has precise tolerances, which is flexible with regard to its construction and which only requires a small investment.

The aforementioned object is achieved by means of a manoeuvring arrangement according to the present invention, which is characterized in that the manoeuvring bracket is formed as at least one cut piece of an extruded profile in which said second latch portion is arranged, in that the manoeuvring bracket is, in its profile shape, formed with said latch edges and in that said first latch portion is formed by a latch element arranged movably in the lever, which is arranged to cooperate with said latch edges.

### DESCRIPTION OF THE FIGURES:

The invention will now be described in more detail in relation to various embodiments and with reference to the accompanying drawings, in which
- Fig. 1: shows a side view of a manoeuvring arrangement according to the invention in the form of a gear control as viewed from the left-hand side in a vehicle,
- Fig. 2: shows the gear control, viewed from the right-hand side,
- Fig. 3: shows an X-ray picture of the gear control in the park position,
- Fig. 4: shows a section through the gear control along line IV-IV in Fig. 3,
- Fig. 5: shows an X-ray picture of the gear control in another gear position,
- Fig. 6: shows a section through the gear control along line VI-VI in Fig. 5,
- Figs 7, 8 & 9: show various views of parts of a manoeuvring latch included in the gear control,
- Figs 10 & 11: show a side view and a plan view respectively of an alternative embodiment, of a manoeuvring bracket included in the gear control,
- Figs 12 & 13: show the gear control according to the invention in a second embodiment in two different gear positions,
- Fig. 14: shows the gear control according to the invention in a third embodiment.

### DETAILED DESCRIPTION OF PREFERRED EMBODIMENTS:

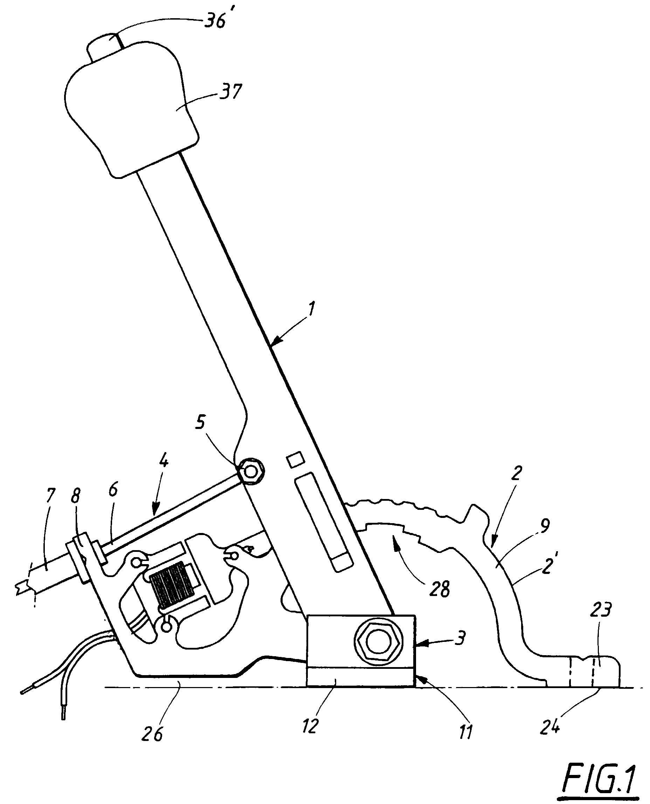

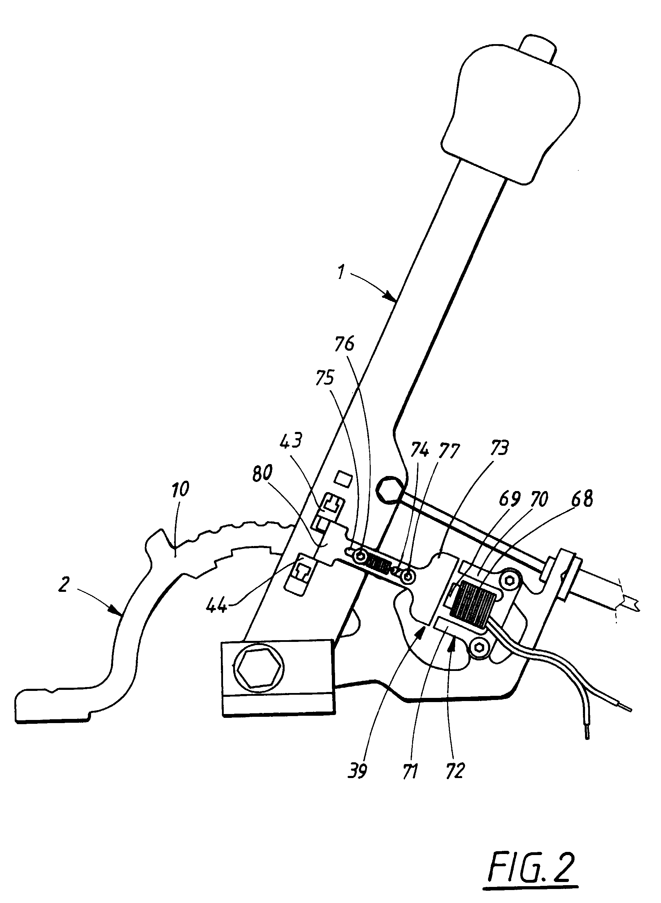

The manoeuvring arrangement is shown in the drawings in the form of a gear control of an automatic gearbox in a motor vehicle and presents two main parts, namely a manoeuvring lever 1 and a manoeuvring bracket 2 (see for example Fig. 1 and 2). The manoeuvring lever 1 is pivotally attached with the manoeuvring bracket 2 via a pivot joint 3, whereby the pivot axis of the manoeuvring lever is defined relative to the manoeuvring bracket. A transmission 4 is coupled to the manoeuvring lever at an attachment point 5 positioned at a distance from the pivot joint 3, whereby the pivoting movement of the manoeuvring lever 1 is transposed into a reciprocal longitudinal movement of the transmission 4. In the shown example, this is formed as a wire 6, the casing of which is fixed in a flange 8 of the manoeuvring bracket 2. In many cases the transmission is formed as a link system where, instead, a link arm is fixed in a corresponding attachment point 5 in the lever. In this way no attachment for the transmission in the form of a flange 8 is required.

The manoeuvring bracket 2 basically consists of an arched bracket 1' which is manufactured as an extruded profile of for instance metal, such as aluminium or an alloy thereof. By extrusion the profile can be provided with a plurality of functions at relatively low cost by choice of the profile shape. The manoeuvring bracket 2 is prepared by cutting the continually produced profile in straight cut sections so that two planar, substantially parallel sides 9, 10 are obtained.

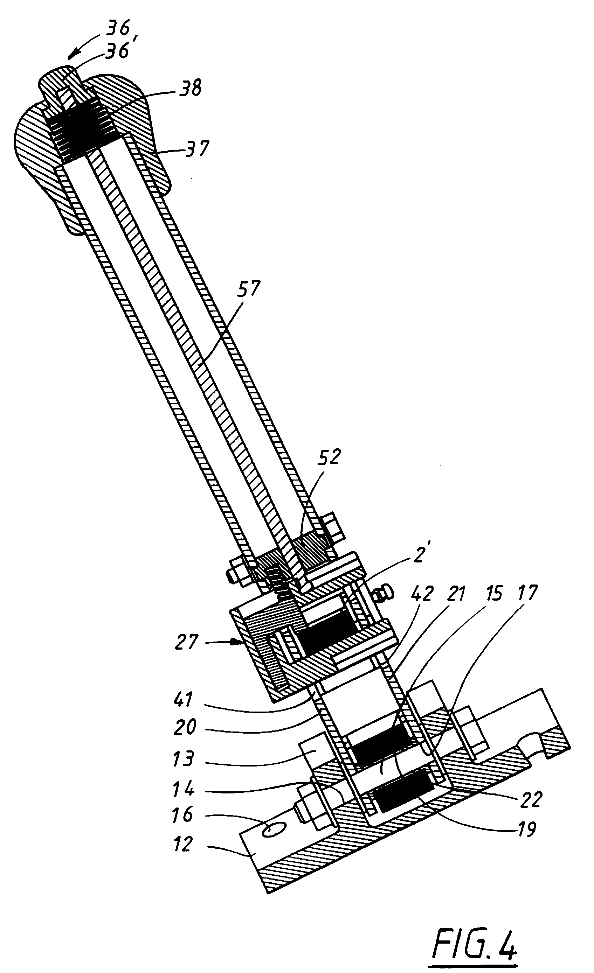

A separate pivot bracket 11 is also included in the manoeuvring bracket 2, for the pivotal attachment of the manoeuvring lever to a base, for example a fixed piece of the vehicle. The pivot bracket 11, as shown for example in Fig. 1 and 4, is similarly advantageously produced as an extruded profile and presents two fastening flanges 12 and two bearing supports 13, each with its own through hole 14, through which extends a pivot shaft 15 in the form of a nut and bolt. The pivot bracket 11 can, in certain applications, advantageously even be manufactured from sheet metal. The fastening flanges 12 are provided with through-holes 16 for receiving fastening screws (not shown). As is clear from Fig. 4 the pivot shaft also extends through two through-holes 17 in the manoeuvring lever 1 which, in the shown example, is formed as a tube with a round or rectangular cross section for example.

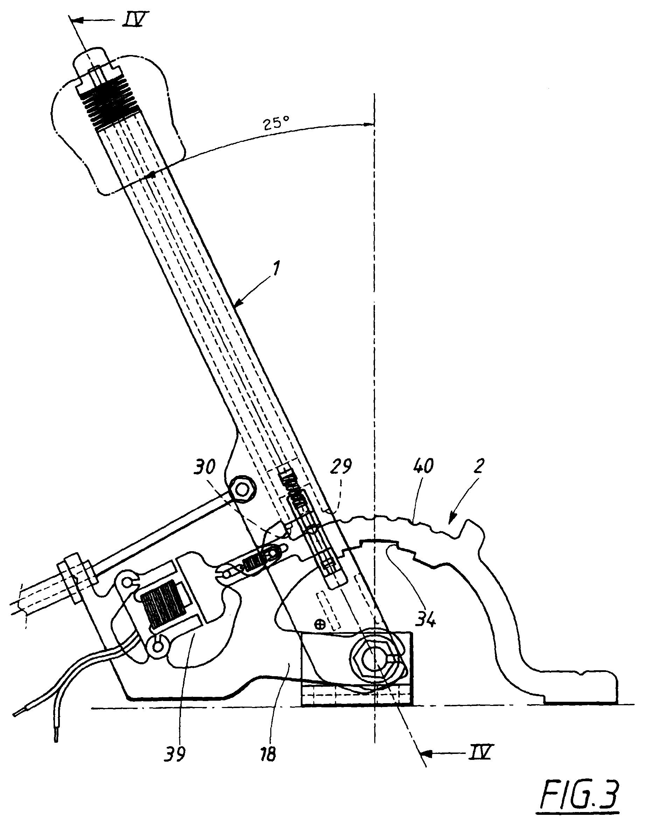

As is clearest from Fig. 3, the position of the pivotal joint 3 of the manoeuvring lever 1 relative to the manoeuvring bracket 2 is determined by means of an arm 18 formed in the profile, said arm having a through-hole 19, through which the pivot shaft 15 extends and is positioned with well-defined tolerance concerning the position of the pivotal centre of the manoeuvring lever relative to the manoeuvring bracket 2. The sideways position along the pivotal shaft 15 is also defined, which is primarily due to the fact that the opposed walls 20, 21 of the manoeuvring lever 1 are made to project downwardly on respective sides of the arm 18. In the shown example, two flanged bearing sleeves 22 are provided, said bearing sleeves 22 being of a material with good wear resistance and low friction, which additionally ensures a well-defined, play-free pivot for the manoeuvring lever.

By means of its profile shaped, the arched bracket 2' is formed with a fastening portion 23 in the form of a flange which is provided with a through-hole for accepting a screw (not shown). The fastening portion presents a support surface 24 on its lower side, said support surface being planar for contact against a planar surface of a fixed part of the vehicle. A groove 25 is formed in the profile for defining the centre of the through-hole, whereby the positioning in the vehicle can be defined with great precision.

Due to the above-described construction of the manoeuvring bracket 2 with two bracket parts, i.e. the arched bracket 2 and the pivot bracket 11, the arched bracket 2' can be produced with a limited, space-saving width, which in the shown example is less than the width of the manoeuvring lever 1, and still obtain a stable fastening of the manoeuvring lever as well as the manoeuvring bracket. This is achieved by the gear control having a three-point fastening with triangularly orientated fastening points, whereby the fastening portion 23 of the arched bracket forms a symmetrically-centrally placed attachment point, whilst both of the attachment points 16 of the pivot bracket are displaced sideways on respective sides of an imaginary symmetrically-centrally vertical plane through the arched bracket 2', at right angles to the pivot shaft 15. The arched bracket 2' is thus supported directly against the base with only one attachment point, whilst other contact with the base occurs via the pivot bracket. A distinct space 26 is thus maintained from the base at one end of the arched bracket 2', whereby play and vibrational noise is avoided.

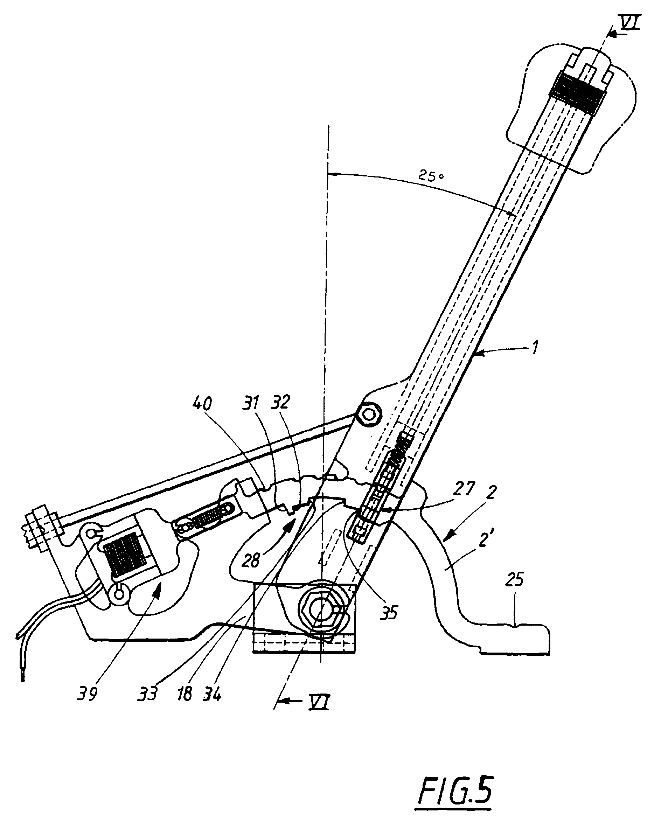

The gear control is arranged, in a manner known per se, to determine the different gear positions of the automatic gearbox by selection of the pivotal location of the manoeuvring lever 1, and by actuation of said automatic gearbox via the transmission 4. In the shown example, the gear control is arranged in a standard manner to adopt six different gear positions, namely park position P, reverse position R, neutral position N, normal drive position D and two special drive positions 3 and L. According to present standards, the gear control is provided with a releasable manoeuvring latch 27, 28 in order to prevent unintentional manoeuvring from certain gear positions to certain other gear positions, both for reasons of safety and in order to protect the gearbox. The manoeuvring latch presents a first latch portion 27 belonging to the manoeuvring lever and a second latch portion 28 belonging to the manoeuvring bracket. The manoeuvring lever 1 is, in the shown example, as most clearly seen from Fig. 3 and 5, provided with a continuous hollow space extending transverse to the longitudinal direction of the manoeuvring lever, which is achieved by the lever presenting two openings 29, 30 facing each other and being positioned in the wall of the tubular manoeuvring lever. The arched bracket 2' is additionally arranged to extend through said hollow space in the manoeuvring lever which is movable over an angular sector between two end positions so that the various gear positions of the gear control are covered. The first latch portion 27 belonging to the manoeuvring lever 1 is formed by a unit in the manoeuvring lever which is movable by the driver, said unit being arranged to cooperate with the other fixedly attached latch portion 28 in the manoeuvring bracket 2 and, depending on the manoeuvring position and the form of the latch part 28, to permit and to block manoeuvring movements of the lever 1. The construction of the movable latch portion 28 will be described in more detail below.

The latch portion 28 belonging to the manoeuvring bracket 2 has been achieved simply due to the fact that the arched bracket 2', over the part which lies within the movement sector of the manoeuvring lever, is profiled with a plurality of radially extending latching edges 31-35. These are so arranged that, as standard, the manoeuvring lever 1 is blocked against movements in certain directions i.e. from certain latched positions to certain other latched positions, but permits movement in the opposite direction. However, complete latching is present in the P-position. The latching can however be released by means of a release mechanism 36 in the form of a push-button 36' arranged on the gear lever knob 37 and which is biased into an end position by means of a spring 38, by means of which push-button the latch part 27 is movable. The manoeuvring latch is however locked in the P-position under certain conditions by means of an adjustable lock 39, the construction of which will be described in more detail below. By means of the adjustable lock 39, movement out of the P-position can for example be prevented if the vehicle's hand or foot brake are not activated and the ignition key is not in the ignition position, which is a factor giving rise to increased safety.

In certain applications the gear control 1 is additionally provided with a position indexing system which ensures that the gear lever distinctly adopts and maintains chosen gear positions. This function is also achieved by profiling the manoeuvring bracket with a number of tracks 40, one track for each gear position, whilst an indexing mechanism in the form of a spring-biased element is arranged in the gear lever, said element being arranged to project into the respective track and maintain the gear lever in the chosen position. The tracks are so formed together with the spring-biased element that they do not produce any blocking against movement between the various gear positions. The spring-biased element is arranged in the shown example in a manner which will be described in more detail below.

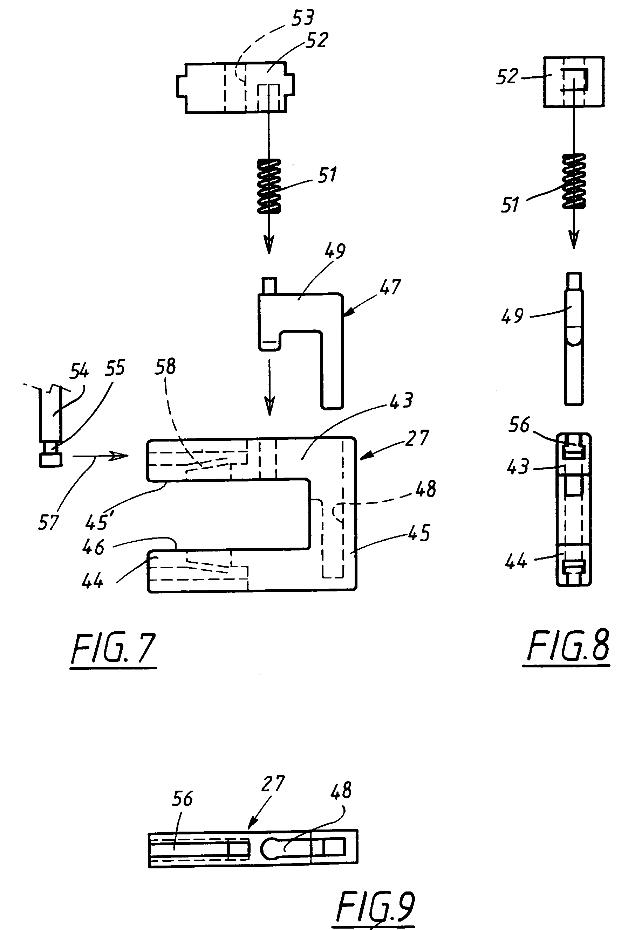

The latching portion 27 of the manoeuvring latch which belongs to the manoeuvring lever 1 forms, together with the indexing mechanism, a combined unit with a construction which is best shown in Fig. 4, 6, 7, 8 and 9. The latch portion 27 is formed by a latch hook element which is guided and moveable in tracks 41, 42 in the manoeuvring lever, said latch hook element having two legs 43, 44 and a transverse piece 45. In the shown example the latch hook element is U-shaped but can of course also be rectangular or of a different form wherein two legs are fixedly connected to each other. The legs 43, 44 form between them a space 45', into which the manoeuvring bracket is intended to project. At least the inwardly facing edge 46 of one of the legs 44 forms a latching edge for cooperation with the latching part 28 of the manoeuvring bracket 2, i.e. the fixed latching edges 31-35 which, in the first embodiment, are arranged on the lower side of the bracket. The mechanism 47 for positional indexing is integrated with the movable latch portion 27 in that this is provided with a recess 48. An indexing element 49 is movable in this so that a pin 50 is pressed against the arched bracket 2' by the action of a spring 51, on the side where the index track 40 is arranged, i.e. on the upper side of the manoeuvring bracket 2 in the first embodiment. The spring 51 is constrained between a piece 52 fixedly arranged in the manoeuvring lever, said piece being provided with a continuous channel 53 through which the manoeuvring rod 54 extends and is movable. The latch hook element 27 is biased by the spring 38 via the rod 54 so as to lie with its latching edge 46 in contact with the manoeuvring bracket 2, with a force which extends in the longitudinal direction of the manoeuvring lever.

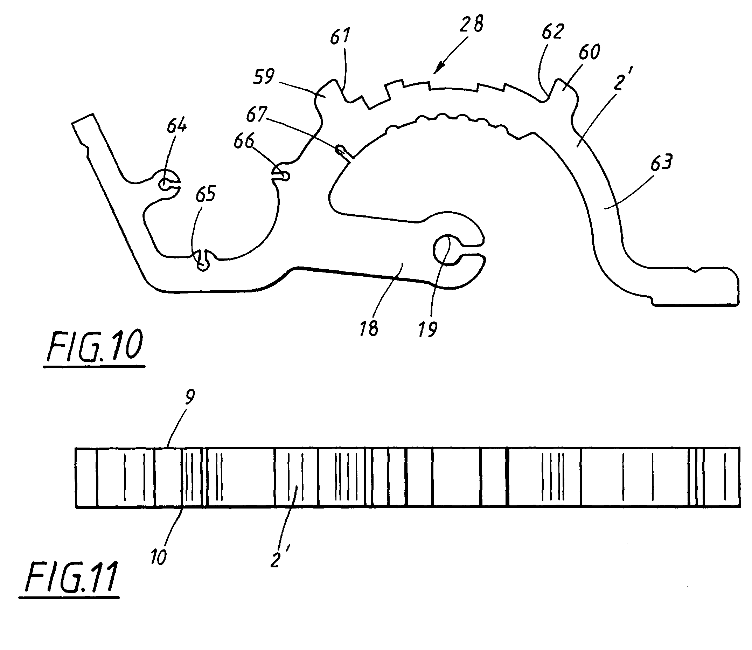

The manoeuvring rod 54 is, in the shown example, provided at its lower end with a neck portion 55, whilst the latch hook element 27 is formed with an open channel 56 formed transversely in a corresponding manner towards the free ends of the legs 43, 44, said channel 56 being formed in both legs 43, 44 so that when mounting the manoeuvring rod's end with a sideways movement (see the arrow 57) this can be introduced into the channel and maintained there under the action of a spring-biased tongue 58. In this way the latch portion 27 can be turned so that the manoeuvring rod 54 can be fixed to either of the two legs 43, 44, whereby one and the same latch portion can be used for two different types of gear control. Apart from the embodiment shown in Fig. 1-6 with the positional indexing on the upper side and the latch part 28 on the lower side of the bracket, the latch part can alternatively be arranged on the upper side of the arched bracket, whilst the positional indexing, i.e. the track 40, can be arranged on the lower side of the bracket as shown in the alternative embodiment in Fig. 10.

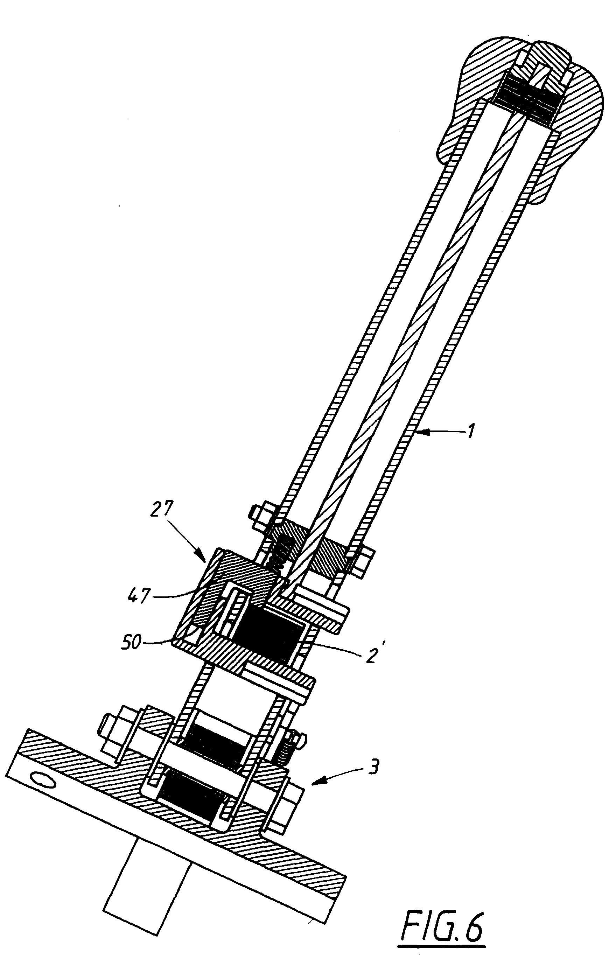

As shown in Fig. 3 and 4, the movable latch part 27 is in an upper position when the manoeuvring lever 2 is in the P-position, whereby the release button 36' is in an outer position. Corresponding positions are also adopted in the N and D-positions, whilst in the R and L-positions the release mechanism and thereby also the latch portion 27 are made to adopt an intermediate position (not shown) by pressing in the button 36'. In order to leave the P-position and to take up the special driving position L, the button 36' has to be pressed in completely, whereby the latch portion 27 is made to adopt the lower position shown in Fig. 5 and 6.

Fig. 10 shows the arched bracket 2' completely separately and in an alternative embodiment with the latch portion 28 on the upper side of the profile and the index track 40 on the lower side. In this figure two upright portions 59, 60 are clearly visible, said portions forming abutment surfaces with their surfaces 61, 62 which face each other and define end positions for the manoeuvring lever 1 by abutment against these walls above both openings 29, 30 of the lever. Additionally, the basic shape of the profile is clearly shown as a central, substantially semi-circular arch-shaped portion 63, of which the segment between the abutment portions 59, 60 presents the latch portion 28 of the manoeuvring bracket 2 on the one side of the profile, whilst the index track over the same segment is arranged on the opposite side of the profile. In the embodiment shown in Fig. 10 with the latch portion 28 arranged on the upper side, the release mechanism 36 and therewith also the movable latch portion 27 have to be spring-biased in a direction downwardly towards the manoeuvring bracket 2, whilst the release button 36' is formed for a lifting movement in order to lift the latch portion past the actual latching edges. Irrespective of whether the latch portion 28 is arranged on the upper or the lower side of the manoeuvring bracket 2, it is also imaginable that the track 40 for positional indexing is completely omitted or arranged in another way. Fig. 10 also shows four fastening holes 64, 65, 66, 67 for the releasable lock 39.

From Fig. 11 it is clear that the manoeuvring bracket 2 consists of a profile which is cut transversely to the profile direction with its two planar, mutually parallel side surfaces 9, 10, where practically all the functions of the bracket are thus achieved by a particular form of the profile. The side surfaces 9, 10, however, have a function as abutment surfaces for the manoeuvring lever upon heavy sideways lever loading and also as a fastening surface for the release lock 39.

The construction of the release lock 39 is best seen from Fig. 2, 3 and 5, to which reference is made in the following. The release lock is formed as an electromagnet with a coil 68 wound on a middle leg 69 of a stamped, firm piece of sheet 72 of magnetisable material provided with three legs 69, 70, 71. This is fixedly screwed to fastening holes 64, 65 in the arched bracket 2'. The release lock 39 also includes a movable piece of sheet 73, positioned in the same plane as the firm piece of sheet, said piece of sheet 73 being of a magnetisable material. This is provided with two elongated holes, 74, 75, through which two screws 76, 77 are fastened in fastening holes 66, 67 in the arched bracket 2'. A distance plate (friction plate) 78 is attached inside the movable piece of sheet for guiding this. By means of a tension spring 79 fixed between the hole 75 and the screw 77, the movable piece of sheet 73 strives to adopt a forward latching position. In this position a locking portion 80 (see also Fig. 4) of the movable piece of sheet projects between the two legs of the latch part 27 when the manoeuvring lever 1 is in the P-position and maintains the latch lever locked in the P-position. The latch can therefore not be released with the release mechanism 36. When a voltage is applied to the coil of the electro-magnet, i.e. when the vehicle's foot or handbrake is applied and the ignition lock is in the ignition position, the movable piece of sheet is attracted towards the electro-magnet, by means of which the locking part 80 is moved out of the way and the latch part 27 can be released by pressing down the release button so that the latch part 27 is led with its latching edge 46 to a position below the fixed latching edge 31 on the latching part 28. In the shown example the movable piece of sheet 73 extends outside the lever 1 just like the latch part 27 with both its legs 43, 44.

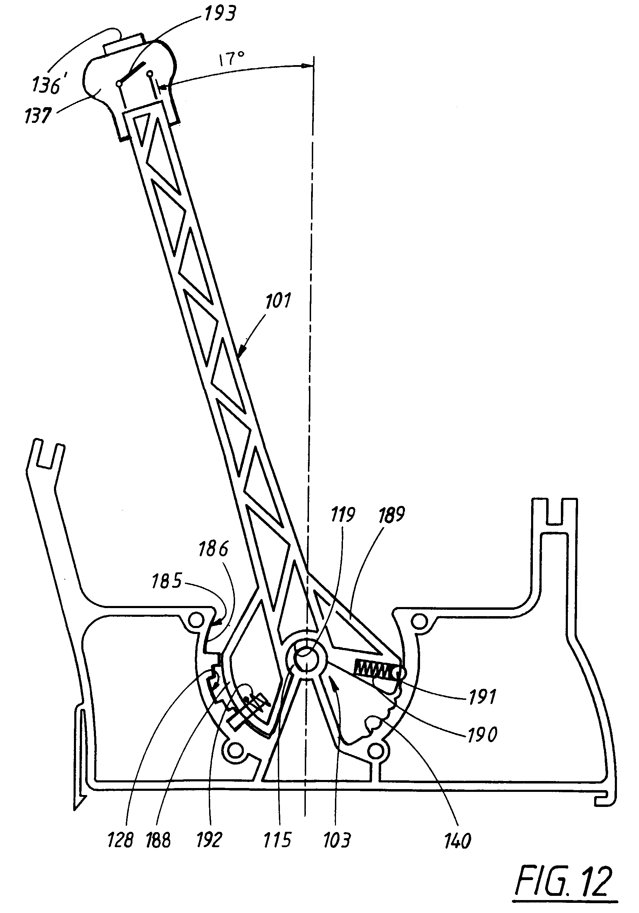

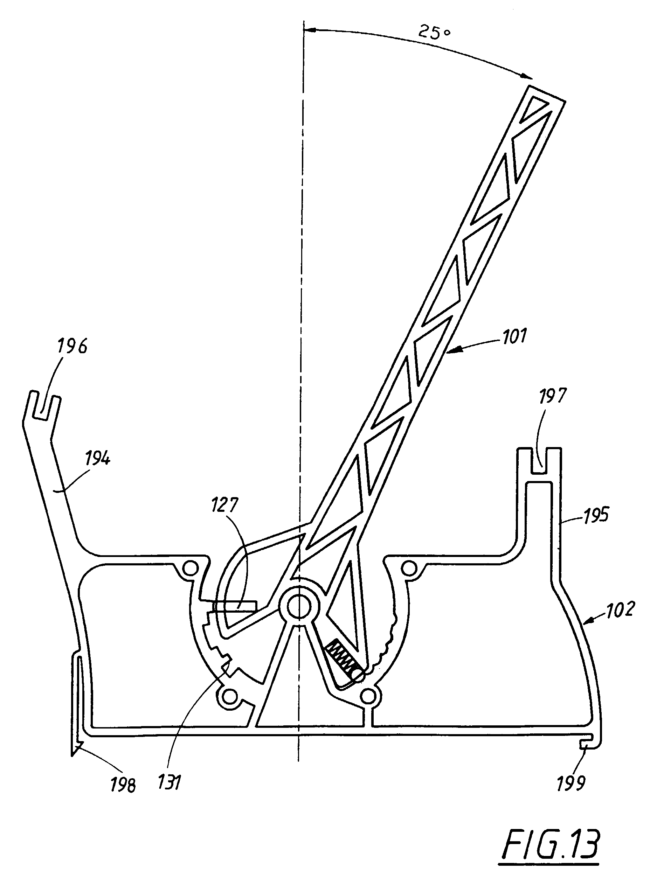

Fig. 12 and 13 show an alternative embodiment of a gear control where the manoeuvring bracket 102 may similarly be formed as a cut piece of an extruded profile with a plurality of functions laid into the shape of the profile. In the shown example the manoeuvring lever 101 can also be formed as a cut piece of an extruded profile in order to form the frame of the manoeuvring lever, said frame then being covered with a sleeve or side pieces as well as being provided with a manoeuvring knob 137 with a release button 136'. In this example the manoeuvring bracket 102 is formed with a shaft 115 built into the profile shape, said shaft being supported by an arm 118. In a corresponding manner the manoeuvring lever 101 is formed with a cylindrical, downwardly-open recess 119, whereby the manoeuvring lever is allowed to perform a pivotal movement within its predetermined angular sector, which is required for movement between the different gear positions. The shaft portion 115 projects into a hollow space 185 with concave, wall portions 186, 187 which are basically cylindrically sleeve-shaped. More particularly one of the wall portions 186 is arranged on one side of the arm 118 and supports the fixed latching portion 128 of the manoeuvring latch belonging to the manoeuvring bracket. The latch portion 127 of the manoeuvring latch belonging to the manoeuvring lever 101 is movably attached in a movable holding part 188 in a hollow space 185 facing the wall portion 186. The latch part 127 is formed more particularly by a latch hook element which is radially adjustable relative to the shaft of the pivot portion 103. This is arranged to block the manoeuvring lever 101 against pivoting in certain positions and certain directions by cooperating with the latching edges 131 of the latching portion 128, which are formed in the wall portion 186.

The second wall portion 187 of the hollow space 185 takes up the track 140 included in the mechanism for positional indexing, i.e. one track for each gear position. In this way the manoeuvring lever 101 is provided with a second holding part 189 which supports the indexing element 191 which is spring-biased by means of a compression spring 190, said indexing element in the shown embodiment being formed as a ball or a cylinder. This is formed to define and guide the gear lever into the correct gear position but not to block the gear changing movement of the gear lever.

In the embodiment shown in Fig. 12 and 13, the release mechanism is of electro-mechanical type, whereby the latch hook element 127 forms a movable armature in an electromagnet with a schematically depicted electro-magnetic coil 192 or solenoid which is part of an electric circuit. This electric circuit is arranged to be closed or opened respectively by an electrical switch 193 operable by the release button 136, as shown schematically in Fig. 12. This is advantageously arranged to be biased towards the open position, i.e. open electric circuit, in which the latch hook element 127 is biased towards adopting a radially outward position by a spring (not shown), which is depicted in Fig. 12 and in which the manoeuvring lever is thus blocked against manoeuvring movement. In the P-position the blocking is active in both movement directions, whilst for example in the R-position, blocking occurs against movement towards the P-position, but movement to the N and D-position respectively is permitted. This is determined by the shape of the latch portion 28 which determines the chosen standard functions as far as concerns blocking. The electrical actuation can in itself be formed by a so-called double-acting electro-magnet and double electric circuits where the electrical switch 193 is adapted to alternatively close the one or the other electric circuit for switching the element between the outer and the radially inner position. Alternatively, the activation can be reversed so that the latch hook element 127, when the electric circuit is closed, is biased to adopt a radially inner position and, in a condition where the current is turned off, to adopt the radially outer position shown in Fig. 12.

Fig. 13 shows a manoeuvring lever in the L-position which can be adopted by the latch hook element being moved to its radially inner position depicted in Fig. 13, i.e. a withdrawn position, so that the latch hook element is not blocked by the latching edges which are passed during the manoeuvring movement. Due to the constant biasing of the latch hook element 127 to adopt its radially outer position, the element will be moved as soon as the manoeuvring lever is moved for instance to the position 3 which forms a radially intermediate position similar to position R, whilst the positions D, N and P represent the radially outer positions.

The embodiment according to Fig. 12 and 13 additionally presents arms 194, 195 and screw holes or channels 196, 197 in order to support and affix, by means of screws, a cover part or panel (not shown), which encapsulates the gear control in a housing and presents an elongated opening through which the manoeuvring lever projects. In a conventional manner the panel presents a display at the opening, i.e. markings for the gear positions and an indication of the adopted gear position which follows with the manoeuvring movement of the arm. The manoeuvring bracket 102 further presents hook elements 198, 199 for fastening of the manoeuvring brackets for instance to an attachment plate or attachment edge of the vehicle.

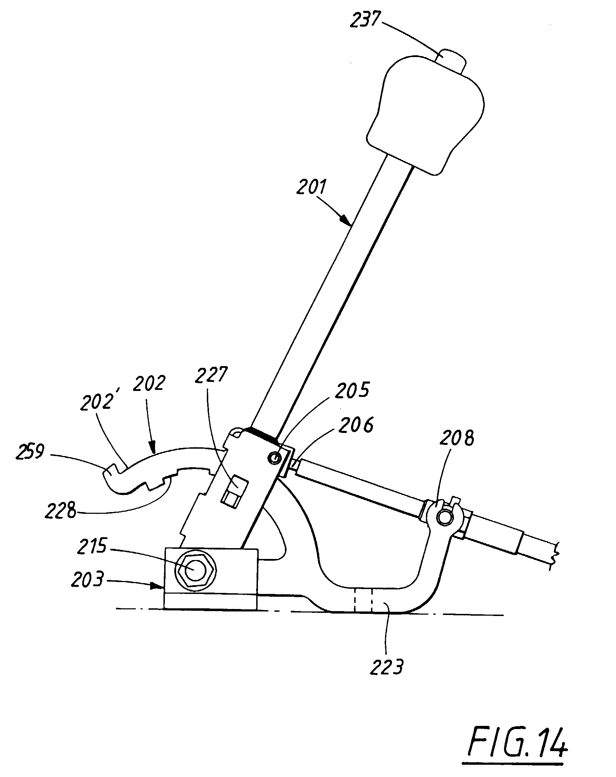

The third embodiment according to Fig. 14 shows an alternative construction of the arched bracket 202'. The bracket in this case is an open arch which ends in an upright abutment portion 259 for the end position of the lever 201. In this way the arched bracket's 202' attachment portion 223 (with fastening holes for non-depicted screws) is formed as an arm, the end 208 of which forms an attachment for the wire casing 207. In this example the attachment is formed as a pivot joint so that the wire casing has a pivotal attachment. In this way bending of the wire 206, which would otherwise occur due to displacement of the attachment point 205 of the wire to the lever 201, is reduced.

In the embodiment according to Fig. 14, the joint bracket 203 and the pivot shaft 215 correspond completely with the first embodiment although the positional indexing is not present in this case. In this way the manoeuvring latches 227, 228 can be chosen with a simple design of the movable latching portion 227 which, as in the first embodiment, is radially movable and releasable upon pressing the button 237 against the action of a spring (not shown). No release lock is shown in this case but in principle this can be formed as in the first embodiment.

To summarise, the manoeuvring bracket consists basically of a cut piece of an extruded profile in which the plurality of functions of the bracket are built into the profile's shape.

The invention is not limited to the embodiments described above and shown in the drawing, but can be varied within the scope of the appended claims. For example, it is imaginable that the separate pivot bracket is produced in one piece with the arched bracket, even in the first embodiment. The manoeuvring latch can be formed in many different ways, as can the releasing lock. The manoeuvring bracket can, in its entirety, have different shapes whilst maintaining the primary function of pivotally anchoring the manoeuvring lever and defining the manoeuvring positions as well as releasably blocking certain manoeuvring movements. The manoeuvring lever can be manufactured either as an extruded profile or in pressed sheet. The indexing tracks can also be placed so that the position-sensing indexing element can be arranged to be movable sideways, i.e. parallel to the pivot shaft. This can be solved i.e. by forming the profile with holes or with radially-directed edge surfaces. The profile, i.e. the bracket part, can be formed with attachments for various peripheral components, such as the display for gear positions, switches, **etc.** The bracket part can instead intersect the lever at the side of this, instead of extending through a hole in the lever.

## Claims

1. Manoeuvring arrangement, comprising a manoeuvring lever (1/101/201), a manoeuvring bracket (2/102/202) in which the lever is pivotally attached for movement between a number of manoeuvring positions, and a releasable manoeuvring latch (27, 28/127, 128/227, 228) for releasable blocking of the lever against an unintentional movement to certain manoeuvring positions, whereby the manoeuvring latch comprises a first latch portion (27/127/227) belonging to the lever and a second latch portion (28/128/228) belonging to the manoeuvring bracket, said second latch portion being formed by latch edges (31-35/131) in the manoeuvring bracket,
**characterized** in that the manoeuvring bracket (2/102/202) is formed as at least one cut piece of an extruded profile in which said second latch portion (28/128/228) is arranged, in that the manoeuvring bracket (2/102) is, in its profile shape, formed with said latch edges (31-35/131) and in that said first latch portion (27/127) is formed by a latch element arranged movably in the lever (1/101), which is arranged to cooperate with said latch edges.

2. Manoeuvring arrangement according to claim 1,
**characterized** in that the manoeuvring bracket (2) comprises a bracket portion (2') which supports the second latch portion (28/128/228) and extends in line with the pivot plane of the lever.

3. Manoeuvring arrangement according to claim 2,
**characterized** in that the manoeuvring lever (1) comprises a continuous hollow space (29, 30) extending transversely relative to its longitudinal direction.

4. Manoeuvring arrangement according to claim 1,
**characterized** in that the manoeuvring bracket's (2) bracket part (2') presents two planar, substantially parallel sides (9, 10).

5. Manoeuvring arrangement according to claim 2,
**characterized** in that the manoeuvring bracket (2) also comprises a pivot bracket (3) for the manoeuvring lever and in that the pivot bracket is also produced as an extruded profile.

6. Manoeuvring arrangement according to claim 1,
**characterized** in that the manoeuvring bracket (2) is formed with fastening means (8/196, 197) for mounting of connected parts.

7. Manoeuvring arrangement according to claim 6,
**characterized** in that said attachment means (8) comprises an attachment for the wire casing (7).

8. Manoeuvring arrangement according to claim 6,
**characterized** in that said attachment means comprises attachments (196, 197) for connected panels.

9. Manoeuvring arrangement according to claim 1,
**characterized** in that the first latch portion (27) belonging to the lever (1) is arranged to perform a forwards and backwards movement between blocking positions and free positions and is alterable for cooperation with the second latch portion depending on whether this is positioned on one or the other side of said part.

10. Manoeuvring arrangement according to claim 9,
**characterized** in that the first latch portion (27) is provided with two coupling sites (56) for releasable coupling of one or the other site with a release mechanism for the manoeuvring latch arranged in the lever (1).

11. Manoeuvring arrangement according to claim 10,
**characterized** in that the first latch portion (27) is provided with two legs (43, 44), each extending on its side of the longitudinal portion of the manoeuvring bracket.

12. Manoeuvring arrangement according to claim 11, provided with an indexing mechanism for defining the lever positions, **characterized** in that the indexing mechanism comprises markings in the longitudinal portion of the manoeuvring bracket, which are positioned on the side which faces away from the second latch portion (28) and in that one leg of the first latch portion forms a latch part and the other leg supports a movable portion of the indexing mechanism.

13. Manoeuvring arrangement according to claim 9, provided with an electrically activatable release lock (39) for the movable latch portion (27), **characterized** in that the first latch portion (27) presents a part which cooperates with a movable lock part (80, 180) of the release lock for locking the movable latch portion under certain conditions.

## Patentansprüche

1. Steueranordnung mit einem Steuerhebel (1; 101; 201), einem Steuerträger (2; 102; 202), in welchem der Hebel schwenkbar für eine Bewegung zwischen mehreren Steuerstellungen angebracht ist, und mit einer lösbaren Steuerverriegelung (27, 28; 127, 128; 227, 228) für ein lösbares Blockieren des Hebels gegen eine unbeabsichtigte Bewegung in bestimmte Steuerstellungen, wobei die Steuerverriegelung einen ersten Vorriegelungsabschnitt (27; 127; 227), der zum Hebel gehört, und einen zweiten Verriegelungsabschnitt (28; 128; 228), der zum Steuerträger gehört, aufweist, wobei der zweite Verriegelungsabachnitt durch Verriegelungskanten (31-35; 131) in dem Steuerträger gebildet ist,
**dadurch gekennzeichnet,**
dass der Steuerträger (2; 102; 202) als mindestens ein bearbeitetes Teil eines extrudierten Profils ausgebildet ist, in dem der zweite Verriegelungsabschnitt (28; 128; 228) angeordnet ist;
dass der Steuerträger (2; 102) in seiner Profilform mit den Verriegelungskanten (31-35; 131) ausgebildet ist; und
dass der erste Verriegelungsabschnitt (27; 127) durch ein in dem Hebel (1; 101) bewegbar angeordnetes Verriegelungselement gebildet ist, welches für ein Zusammenwirken mit den Verriegelungskanten vorgesehen ist.

2. Steueranordung nach Anspruch 1, dadurch gekennzeichnet,
dass der Steuerträger (2) einen Trägerabschnitt (2') aufweist, welcher den zweiten Verriegelungsabschnitt (28; 128; 228) unterstützt und sich in Übereinstimmung mit der Drehebene des Hebels erstreckt.

3. Steueranordnung nach Anspruch 2, dadurch gekennzeichnet,
dass der Steuerhebel (1) einen durchgehenden Hohlraum (29, 30) aufweist, der sich quer relativ zu seiner Längsrichtung erstreckt.

4. Steueranordnung nach Anspruch 1, dadurch gekennzeichnet,
dass der Trägerabschnitt (2') des Steuerträgers (2) zwei ebene, im Wesentlichen parallele Seiten (9, 10) aufweist.

5. Steueranordnung nach Anspruch 2, dadurch gekennzeichnet,
dass der Steuerträger (2) außerdem einen Drehträger (3) für den Steuerhebel aufweist und dass der Drehträger auch als extrudiertes Profil hergestellt ist.

6. Steueranordnung nach Anspruch 1, dadurch gekennzeichnet,
dass der Steuerträger (2) mit mindestens einer Befestigungseinrichtung (8; 196, 197) für eine Montage von angeschlossehen Teilen ausgebildet ist.

7. Steueranordnung nach Anspruch 6, dadurch gekennzeichnet,
dass die mindestens eine Befestigungseinrichtung (8) eine Befestigung für das Drahtgehäuse (7) aufweist.

8. Steueranordnung nach Anspruch 6, dadurch gekennzeichnet,
dass die mindestens eine Befestigungseinrichtung Befestigungen (196, 197) für angeschlossene Paneelen aufweist.

9. Steueranordnung nach Anspruch 1, dadurch gekennzeichnet,
dass der erste Verriegelungsabschnitt (27), der zu dem Hebel (1) gehört, für ein Ausführen einer Vor- und Rückwärtsbewegung zwischen Sperr- und Freistellungen angeordnet und für eine Verbindung mit dem zweiten Verriegelungsabschnitt veranderbar ist, abhängig davon, ob dieser auf der einen oder anderen Seite des Teils angeordnet ist.

10. Steueranordnung nach Anspruch 9, dadurch gekennzeichnet,
dass der erste Verriegelungsabschnitt (27) mit zwei Verbindungsstellen (56) für eine lösbare Verbindung der einen oder der anderen Stelle mit einem Auslösmechanismus für die in dem Hebel (1) angeordnete Steuerverriegelung ausgestattet ist.

11. Steueranordnung nach Anspruch 10, dadurch gekennzeichnet,
dass der erste Verriegelungsabachnitt (27) mit zwei Sehenkeln (43, 44) ausgestattet ist, die sich jeweils auf ihrer Seite des Längsabschnitts des Steuerträgers erstrecken.

12. Steueranordnung nach Anspruch 11, ausgestattet mit einem Indizierungsmechanismus zum Festlegen der Hebelstellungen, dadurch gekennzeichnet, dass der Indizierungsmechanismus Kennzeichnungen in dem Längsabschnitt des Steuerträgers aufweist, welche an der Seite angeordnet sind, die weg von dem zweiten Verriegelungsabschnitt (28) zeigt, und dass ein Schenkel des ersten Verriegelungsabschnitts ein Verriegelungsteil bildet und der andere Schenkel einen bewegbaren Abschnitt des Indizierungsmechanismus unterstützt.

13. Steueranordnung nach Anspruch 9, ausgestattet mit einem elektrisch aktivierbaren Auslöseschloss (39) für den bewegbaren Verriegelungsabschnitt (27), dadurch gekennzeichnet, dass der erste Verriegelungsabschnitt (27) ein Teil aufweist, welches mit einem bewegbaren Schlossteil (80, 180) des Auslöseschlosses für einen Verschluss des bewegbaren Verriegelungsabschnittes unter bestimmten Bedingungen zusammenwirkt.

## Revendications

1. Ensemble de manoeuvre, comportant un levier de manoeuvre (1 ; 101 ; 201), une équerre de manoeuvre (2 ; 102 ; 202) dans laquelle le levier est fixé de manière pivotante afin qu'il se déplace entre un certain nombre de positions de manoeuvre, et un verrou libérable de manoeuvre (27, 28 ; 127, 128 ; 227, 228) destiné à bloquer temporairement le levier afin qu'il ne puisse pas se déplacer intempestivement vers certaines positions de manoeuvre, le verrou de manoeuvre comprenant une première portion de verrou (27 ; 127 ; 227) appartenant au levier et une seconde portion de verrou (28 ; 128 ; 228) appartenant à l'équerre de manoeuvre, la seconde portion de verrou étant formée par des bords de verrou (31-35 ; 131) réalisés dans l'équerre de manoeuvre,
caractérisé en ce que l'équerre de manoeuvre (2 ; 102 ; 202) est formée par au moins une pièce coupée d'un profilé extrudé dans lequel la seconde portion de verrou (28 ; 128 ; 228) est disposée, en ce que l'équerre de manoeuvre (2 ; 102) possède les bords de verrou (31-35 ; 131) réalisés dans la forme de son profil, et en ce que la première portion de verrou (27 ; 127) est formée par un élément de verrou disposé afin qu'il soit mobile dans le levier (1 ; 101) et destiné à coopérer avec les bords de verrou.

2. Ensemble de manoeuvre selon la revendication 1, caractérisé en ce que l'équerre de manoeuvre (2) comporte une portion d'équerre (2') qui supporte la seconde portion de verrou (28 ; 128 ; 228) et s'étend dans l'alignement du plan de pivotement du levier.

3. Ensable de manoeuvre selon la revendication 2, caractérisé en ce que le levier de manoeuvre (1) comporte un espace continu (29, 30) qui s'étend transversalement à sa direction longitudinale.

4. Ensemble de manoeuvre selon la revendication 1, caractérisé en ce que la portion d'équerre (2') de l'équerre de manoeuvre (2) présente deux côtés plans pratiquement parallèles (9, 10).

5. Ensemble de manoeuvre selon la revendication 2, caractérisé an ce que l'équerre de manoeuvre (2) comporte aussi un support de pivot (33) destinée au levier de manoeuvre, et le support de pivot est aussi formé par un profilé extrudé.

6. Ensemble de manoeuvre selon la revendication 1, caractérisé en ce que l'équerre de manoeuvre (2) est formée avec un dispositif de fixation (8 ; 196, 197) destiné au montage des parties raccordées.

7. Ensemble de manoeuvre selon la revendication 6, caractérisé en ce que le dispositif de fixation (8) comporte un organe de fixation destiné à une gaine (7) de câble.

8. Ensemble de manoeuvre selon la revendication 6, caractérisé en ce que le dispositif de fixation comporte des organes de fixation (196, 197) de panneaux raccordés.

9. Ensemble de manoeuvre melon la revendication 1, caractérisé en ce que la première portion de verrou (27) appartenant au levier (1) est destinée à effectuer un mouvement vers l'avant et vers l'arrière entre des positions de blocage et des positions libres, et peut être modifiée afin qu'elle coopère avec la seconde portion de verrou selon que celle-ci se trouve d'un côté ou de l'autre de ladite partie.

10. Ensemble de manoeuvre selon la revendication 9, caractérisé en ce que la première portion de verrou (27) est munie de deux emplacements d'accouplement (56) destinés à un accouplement temporaire de l'un ou l'autre emplacement avec un mécanisme de libération du levier de manoeuvre placé dans le levier (1).

11. Ensemble de manoeuvre selon la revendication 10, caractérisé an ce que la première portion de verrou (27) est munie de deux branches (43, 44) qui s'étendent chacune de son côté de la portion longitudinale de l'équerre de manoeuvre.

12. Ensemble de manoeuvre selon la revendication 11, comprenant un mécanisme de positionnement repéré destiné à délimiter les positions du levier, caractérisé an ce que le mécanisme de positionnement repéré comporte des marques placées dans la direction longitudinale de l'équerre de manoeuvre et qui sont positionnées du côté opposé à la seconds portion de verrou (28), et en ce qu'une branche de la première portion de verrou forme une partie dis verrou et l'autre branche supporte une portion mobile du mécanisme de positionnement repéré.

13. Ensemble de manoeuvre selon la revendication 9, muni d'un organe libérable de blocage (39) qui peut être activé électriquement et destiné à la portion mobile de verrou (27), caractérisé an ce que la première portion de verrou (27) comporte une partie coopérant avec une partie mobile (80, 180) de l'organe libérable de blocage afin qu'elle assure le blocage de la portion mobile de verrou dans certaines conditions.
